# NEW EUROPEAN PATENT SPECIFICATION

(11) **EP 0 824 309 B2**
(45) Date of publication and mention of the opposition decision: **10.11.2004**
(45) Mention of the grant of the patent: 02.06.1999
(21) Application number: 97904657.0
(22) Date of filing: 21.02.1997
(51) Int. Cl.: A01K 29/00

(54) **A METHOD OF TREATING ANIMALS, IN PARTICULAR FEEDING SAME**
VERFAHREN ZUR BEHANDLUNG VON TIEREN, INSBESONDERE ZUR DEREN FÜTTERUNG
PROCEDE DE TRAITEMENT ET, PLUS PARTICULIEREMENT, D'ALIMENTATION D'ANIMAUX

(30) Priority: 28.02.1996 NL 1002471
(43) Date of publication of application: 25.02.1998
(73) Proprietor: MAASLAND N.V., 3155 PD Maasland (NL)
(72) Inventor: VAN DEN BERG, Karel, NL-2971 BR Bleskensgraaf (NL)
(74) Representative: Corten, Maurice Jean F.M.
(86) International application number: PCT/NL1997/000081
(87) International publication number: WO 1997/031526

(56) References cited:
- EP-A- 0 572 068
- DE-A- 3 623 816
- FR-A- 2 602 331
- GB-A- 2 220 834
- US-A- 4 288 856
- US-A- 4 517 923
- US-A- 4 532 892
- US-A- 4 617 876
- LANDTECHNIK, vol. 45, no. 11, November 1990, LEHRTE (DE), pages 411-412, XP000165910 K. ENGELHARDT: "Automatisierte Gewichtserfassung von Rindern"
- Proc, Symp. Automation in Dairying, Wageningen Sept. 9-11, 1987 : pp 78-85. 110-115 and 376-383.
- FAT Benchte Nr 475 ; Forschungsanstatt für Agrarwirtschaft und Landtechnik ; 1995 ; pp. 1-6.

## Description

The present invention relates to an implement according to the preamble of claim 1. For the production of milk it is of importance that the animals have an optimal condition, i.e. have a musculature and a fatness so as to provide them with a condition of health being optimal for producing milk. Part of the fat and the muscles is used at the beginning of the period of lactation because of energy deficiency. There is a so-called mobilization of physical reserves. After having calved a cow normally looses 40 to 50 kilos of her weight, mainly in the form of fat. However, in extreme situations this loss may be much greater. In the course of the period of lactation these reserves are made up again. In the course of the lactation period, and in particularly by the time when the animal is set dry, the animal must have a condition that should be maintained until the time when it has calved again. Taking into account the weight pattern shown in the course of time, in particular in the course of the lactation period, it is of importance that the treatment of the animal is such that the physical condition of the animal is optimal for producing milk.

US 4,517,923 discloses a system for feeding animals in which the amount of feed provided to the animal is adjusted based upon a feed consumption prediction formula generally used for the animal and upon the animal's previous performance in comparison with the formula. The system comprises a means for collecting weight characteristics, a means for storing information regarding desired or predicted characteristics, means for comparing and determining the variance between the desired or predicted characteristics and the animal's individual characteristics and means for feeding the animal based on the variance, including means for identifying the animal and means for providing food to the animal in predetermined relationship to the variance. The disadvantage of such a system is that it concentrates on a restricted animal characteristic, e.g. weight or milk production, and cannot detect anomalities with great reliability such as animal illness or an animal on heat which requires special feeding.

DE 36 23 816 discloses a construction for feeding animals comprising a weighing installation and a control unit with memory, so that the weight and weight change of the animal are recorded, enabling the monitoring of feeding habits, mean weight, weight changes etc. of individual animals. The disadvantage of such a construction is that the feed amount is not adapted to the individual animal's requirements depending on lactation cycle, weight gain and animal health.

Engelhardt's 'Automatisierte Gewichtserfassung von Rindern' discloses a method of partial weighing (e.g. weighing the front and the rear of the animal) to determine the total weight of an animal. No relation between feeding requirements and weight gain is described.

It is an object of the invention to provide an implement with which it is possible to monitor the physical condition in a more reliable and efficient way.

In accordance with the invention, an implement for treating animals of the sort as defined above comprises the features of the characterising part of claim 1. This implement can in particular be integrated in a system also comprising an implement for milking animals, whereby fodder is distributed during milking. In particular, the implement can be included in a system also comprising a milking robot for automatically cleaning the teats of an animal to be milked, automatically connecting teat cups to the teats of this animal, automatically milking this animal and automatically disconnecting the teat cups from the teats, whereby, distributed over the period of time required for milking, fodder is supplied. Exactly in such an automized and robotized system, the animals will visit the milk box of their own accord on average approximately three times per twenty-four hours, while in said system it will be possible to carry out a weight measurement three to four times per twenty-four hours.

By combining the signals of various detectors in addition to the weight, it is achieved that it can be established with a greater certainty and more efficiently whether the animal is on heat or ill. Simply the fact that the animal weight has decreased need not necessarily result in an attention signal. By storing a desired weight pattern over a relatively long period of time in the memory of a computer, it will be possible, by adjusting the quantity of feed to be distributed, to post-control each time the actual weight of an animal on the basis of the weight desired. This desired predetermined weight pattern is established on the basis of the breed, the type of carcass and the age of the animals. Although this weight pattern can be determined per animal, it is preferred to establish such a desired weight pattern for groups of animals and to record same in the memory. The period over which the feed control has to take place will preferably comprise at least the period of lactation, because, at the beginning of the lactation period, the weight of the animals will have decreased considerably by the use of the physical reserves because of calving, whereas, when the weight of the animal is again reaching its previous level, it is necessary to see to it that this weight will not increase too much. In the latter case there occurs a fatty degeneration due to which the state of health of the animals will decline and the milk production will decrease.

For example, it is possible to establish the weight of the animals two to four times per twenty-four hours, e.g. when the animals are milked. On the basis of the weights established there can be determined an average, e.g. each time over a period of e.g. three to eight days, while furthermore there can be determined a dispersion range around this average value, which dispersion range is chosen in such a manner that almost all the weight values that are established will fall within the scope thereof, which means that a varying contents of the digestive tract and the udder is taken into account. When the lower limit of this weight interval has come above the weight value stored in the memory being applicable for that moment, the quantity of feed to be distributed will have to be decreased. When the upper limit of the weight interval has come below the weight value stored in the memory being applicable for that moment, the quantity of feed to be distributed will in principle have to be increased. However, such an increase must not be carried out in any case, because it may happen, of course, that in a number of consecutive times there has been established a weight lying below the lower limit of the weight interval; in that case there has to be supplied an attention signal, because, of course, an animal may be ill. In other words, when in a very short time the weight of the animal has decreased to a relatively considerable extent, there has to be verified first whether the animal is ill and only when this apppears not to be the case, the quantity of feed to be distributed can be increased. Also when in a number of consecutive times there has been established a weight lying below the average value, but above the lower limit of the weight interval, there has to be supplied an attention signal. An animal may be on heat or ill or may have caught a latent disease. Whether it is advisable in that case to supply an increased quantity of feed, must be considered case by case.

For a better understanding of the present invention and to show how the same may be carried into effect, reference will now be made, by way of example, to the accompanying drawings, in which:
Figure 1 shows schematically a side view of a milk box provided with an implement in accordance with the invention,
Figure 2A-C shows a number of diagrams on the basis of which the invention will be explained in further detail, and Figure 2D shows a diagram not pertaining to the invention.

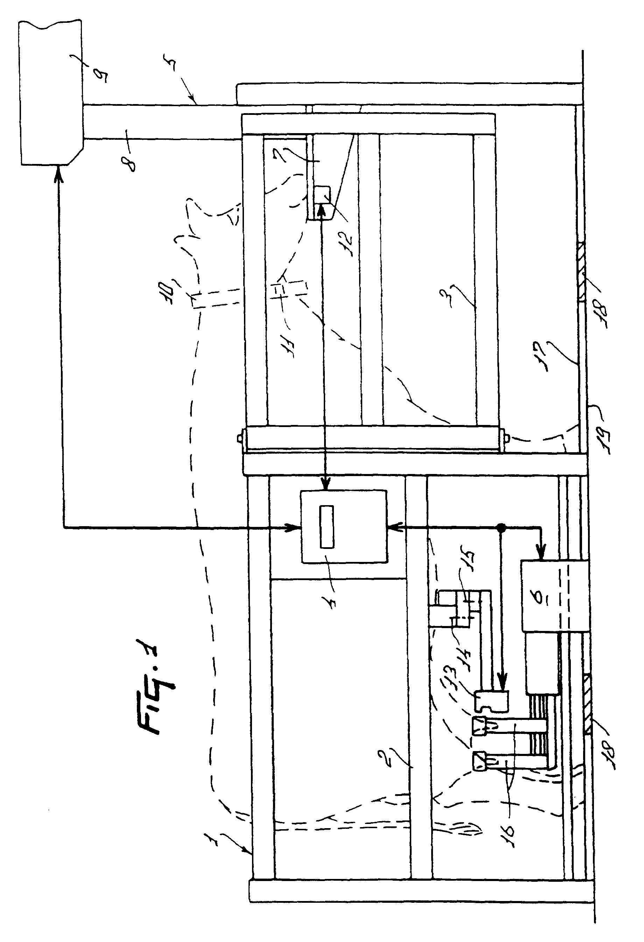

Figure 1 shows a side view of a milk box 1. This milk box is composed of a fencing 2 including an entrance door being provided in the back wall of the milk box 1 and, therefore, not shown in the figure, while there is additionally provided an exit door 3, shown in the figure in the longitudinal side of the milk box, at the front thereof. The implement furthermore comprises a computer 4, an automatic feeding installation 5 and a milking robot 6. The automatic feeding installation 5 includes a feeding trough 7 at the front wall of the milk box 1, a feed supply 8 and a feed reservoir 9. In the feed reservoir 9 the supply of feed to the feeding trough 7 is controlled. For that purpose the automatic feeding installation 5 comprises a control system of which the computer 4 constitutes part. In other words, by means of the computer 4 and the further feed supply control means in the feed reservoir 9, the supply of feed distributed to an animal in the milk box can be controlled. Animals which are allowed to enter the milk box 1 are provided with a collar 10, to which there is fitted a transponder 11. Said transponder 11 cooperates with a sensor 12 which is provided near the feeding trough 7. The sensor 12 is connected to the computer 4. The transponder 11 and the sensor 12 constitute an animal identification system. When an animal has entered the milk box and has advanced sufficiently far to be able to reach with its head into the feeding trough 7, then the distance between the transponder 11 and the sensor 12 is such that a communication between the two elements is possible so that the animal can be identified. Via the connection between the sensor 12 and the computer 4 the file in the computer 4 regarding the relevant animal will become accessible. From this file there can inter alia be obtained data indicating the position of the teats of the animal in the milk box 1, so that detection means 13, which are located outside the milk box 1 in their inoperative position, can be pivoted by means of a pivoting movement about a pair of vertical shafts 14 and 15 under the udder of the animal into a defined position, in order to be able to establish the position of the teats relative to the milk box 1. After the detection means 13, in cooperation with the computer 4, have determined the position of the teats, the milking robot 5, under the control of the computer 4, is controlled in such a way that teat cups 16 pertaining to said milking robot can be connected to the teats of the animal, whereafter the animal is automatically milked. Furthermore, the implement can be provided with (non-shown) means for cleaning of the teats before the milking proper is started.

In the file in the computer 4 there are updated, for each animal individually, all the relevant data regarding milking among which e.g. the milk yield per milking run, possibly even per udder quarter, and various data regarding the condition of health of the animal, as well as regarding the quantity of feed distributed to the animal at each milking run and daily. In the computer there can also be determined how much feed has to be distributed at each milking run in order to obtain an optimal milk production. In other words, the feeding system has a control system comprising the computer and being such that, during the time when an animal is milked, there is automatically distributed to this animal a quantity of feed attuned to the relevant animal. In order to keep the animal quiet during the milking time to be expected, based on the milking times updated in the file of the relevant animal, so that the automatic connection of the teat cups and the consecutive milking can be effected without problems, the control system furthermore has to be such that the quantity of feed to be distributed to an animal is automatically supplied in such a manner that it is spread over the milking time to be expected. Although the distribution of feed can take place at the moment when the animal has entered the milk box, it may be of advantage to wait until the position of the teats is or has been determined and the teat cups are being connected, because, before that time it may be of less importance that the animal is standing quietly in the milk box, whereas on the other hand there is a risk that the animal already lets flow milk due to the fact that distribution of feed is capable of inciting the milking reflex.

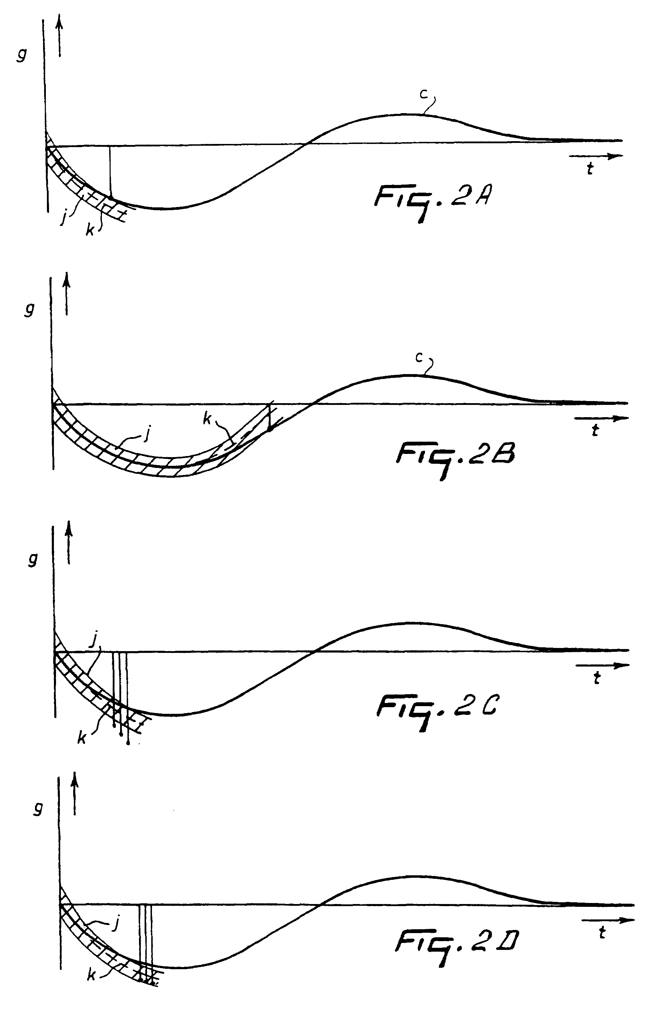

When applying a computer-controlled feeding system the weight pattern of an animal in the course of time has to be taken into account. In Figures 2A-D this weight pattern, which can be established on the basis of e.g. the breed, the type of carcass and the age of the animals, is represented by the curve C. This desired weight pattern is predetermined and stored in the memory of the computer 4. Although it is preferred to store this desired weight pattern over the whole year in the memory of the computer, storage of the desired weight pattern over the lactation period will suffice; thereafter, of course, the weight of an animal will remain rather stable at a constant supply of feed. In view of the feed control the actual weight of the animal has to be updated by means of weighing means and to be compared with the weight desired. For that purpose the milk box is provided with a suspended floor 17, which, via pressure measuring elements 18, such as piezo elements, rests on a fixed floor 19. Each time when an animal enters the milk box 1, the animal is weighed. By determining an average, in particular a progressive average, over these weight values, e.g. each time over the last three to eight days, whereby two to four times per twenty-four hours the weight of the animals is measured, at a varying contents of the digestive tract, in particular the paunch, and the udder there will nevertheless be established a more or less continuous weight pattern. In the diagrams this average weight pattern is indicated by a curve K. In these diagrams there is indicated (in shaded lines) a dispersion range within which, with a healthy animal, most weight values measured or almost all the weight values measured will be found. In the diagrams this weight interval is indicated by J.

The pattern of the curve C in the diagrams of Figure 2 is such that after calving the weight of the animal decreases to a considerable extent, whereas in the course of the lactation period this weight will again reach its previous level and even have the tendency to increase to more than the weight achieved at calving, which has to be prevented. Therefore, the curve C indicates the desired weight pattern that must be aimed for in order to realize an optimal milk production. In Figure 2A the situation is shown in which the actual weight has gradually come below the weight desired. When the upper limit of the weight interval J has come below the weight value desired being applicable for that moment, then action has to be taken i.e. in such a manner that the quantity of feed to be distributed to the anal has to be increased when at least particular circumstances as mentioned hereafter do not occur. Figure 2B shows the situation in which the actual weight has gradually come above the weight desired. When the lower limit of the weight interval J has come above the weight value desired being applicable for that moment, then, on the other hand, the quantity of feed to be distributed to the animal will have to be decreased. Therefore, in case of too large deviations of the average weight of an animal from the desired value therefor, there can be supplied a control signal by the computer 4 to the automatic feeding installation 5 in order to adjust the quantity of feed to be distributed to the animal.

When there occurs a sudden decrease in weight of an animal because of which the upper limit of the weight interval J comes below the weight value desired, then it is not advisable to increase immediately the supply of feed, because, of course, the animal may be ill. In Figure 2C the situation is shown in which in a number of consecutive times there has been measured a further decreasing weight until below the lower limit of the weight interval J. In that case there has to be supplied by the computer 4, by means of a printer or by any means of alarm, an attention signal in order to indicate that the animal may be ill. In Figure 2D the situation is shown in which in a number of consecutive times there has been established a weight lying below the average value, but above the lower limit of the weight interval J. Also in that case there has to be supplied an attention signal, because, of course, the animal may already show disease symptoms or be on heat. The above-described attention signals can be combined in the computer with other signals indicating similar phenomena, such as signals supplied by a mastitis detector provided in the implement, or with signals supplied by a pedometer indicating whether an animal is on heat. By means of a combination of these signals mastitis or heat will be established to a considerably greater degree of reliability.

## Claims

1. An implement for treating animals, comprising a computer (4), in the memory of which a predetermined desired weight pattern for the animals or groups of animals is stored over a relatively long period of time, as well as weighing means (17, 18, 19) suitable for weighing an animal one or more times per 24 hours, such that in the computer (4), on the basis of the measured weight of an animal and earlier established weight values, there is determined an average, and a weight interval taking into account the weight of a varying contents of the digestive tract and the udder around this average value, while there is additionally provided an automatic feeding installation (5) for automatically supplying fodder to the animal, such that, when the desired weight value stored in the memory being applicable for that moment falls outside the established weight interval, the quantity of feed to be distributed to the animal will be adjusted, **characterized in that**, when there occurs a sudden decrease in weight of an animal because of which the upper limit of the weight interval (J) comes below the weight value desired and in a number of consecutive times a further degreasing weight below the lower limit of weight interval (J) has been measured, then, without increasing immediately the supply of feed, an attention signal is supplied by a computer (4) indicating that the animal may be ill which can be combined in the computer with other signals indicating similar phenomena, such as signals supplied by a mastitis detector, or with signals supplied by a pedometer.

2. An implement as claimed in claim 1, **characterized in that** said implement is included in a system also comprising an implement for milking animals, whereby fodder is distributed during milking.

3. An implement as claimed in claim 1 or 2, **characterized in that** said implement is included in a system also comprising a milking robot (6) for automatically cleaning the teats of an animal to be milked, automatically connecting teat cups to the teats of this animal, automatically milking the animal and automatically disconnecting the teat cups from the teats, whereby, distributed over the period of time required for milking, fodder is supplied.

## Patentansprüche

1. Vorrichtung zur Behandlung von Tieren mit einem Computer (4), in dessen Speicher ein vorgegebenes gewünschtes Gewichtsschema für die Tiere oder Gruppen von Tieren über einen relativ langen Zeitraum gespeichert wird, sowie mit einer Wiegevorrichtung (17, 18, 19), die dazu ausgebildet ist, ein Tier einmal oder mehrmals pro 24 Stunden zu wiegen, so daß in dem Computer (4) auf der Basis des gemessenen Gewichtes eines Tieres und früher ermittelter Gewichtswerte ein Durchschnittswert sowie ein an diesen Durchschnittswert angrenzender Toleranzbereich ermittelt wird, der das Gewicht der wechselnden Inhalte des Verdauungstraktes und des Euters berücksichtigt, wobei ferner eine automatische Fütterungsvorrichtung (5) zur automatischen Versorgung des Tieres mit Futter vorgesehen ist, wobei die dem Tier zuzuteilende Futtermenge angepaßt wird, wenn der in dem Speicher gespeicherte, gewünschte und auf diesen Zeitpunkt anwendbare Gewichtswert außerhalb des festgelegten Toleranzbereiches liegt,
**dadurch gekennzeichnet, daß** im Falle einer plötzlichen Gewichtsabnahme eines Tieres, wodurch der obere Grenzwert des Toleranzbereiches (J) unter den gewünschten Gewichtswert sinkt, und wenn zu mehreren aufeinanderfolgenden Zeitpunkten ein weiterer abnehmender Gewichtswert unterhalb des unteren Grenzwertes des Toleranzbereiches (J) gemessen wird, ohne sofortige Erhöhung der Futterzuteilung von einem Computer (4) ein Warnsignal gegeben wird, das anzeigt, daß das Tier möglicherweise krank ist, und das im Computer mit anderen, ähnliche Zustände anzeigenden Signalen kombiniert werden kann, beispielsweise mit von einem Mastitis-Detektor oder einem Schrittzähler erzeugten Signalen.

2. Vorrichtung nach Anspruch 1,
**dadurch gekennzeichnet, daß** die Vorrichtung in ein System integriert ist, das auch eine Vorrichtung zum Melken von Tieren aufweist, wobei während des Melkens Futter zugeführt wird.

3. Vorrichtung nach Anspruch 1 oder 2,
**dadurch gekennzeichnet, daß** die Vorrichtung in ein System integriert ist, das auch einen Melkroboter (6) zum automatischen Reinigen der Zitzen eines zu melkenden Tieres, zum automatischen Anschließen von Zitzenbechern an die Zitzen dieses Tieres, zum automatischen Melken des Tieres und zum automatischen Abnehmen der Zitzenbecher von den Zitzen aufweist, wobei während des für den Melkvorgang benötigten Zeitraumes Futter zugeführt wird.

## Revendications

1. Dispositif de traitement d'animaux comportant un ordinateur (4), dans la mémoire duquel un modèle prédéterminé désiré de poids pour les animaux ou groupe d'animaux est stocké sur une période de temps relativement longue, ainsi que les moyens de pesée (17, 18, 19) adaptés pour peser un animal, une ou plusieurs fois fois par 24 heures, de telle sorte que dans l'ordinateur (4), sur la base du poids mesuré d'un animal et des valeurs de poids établies précédemment, une moyenne est déterminée ainsi qu'un intervalle de poids prenant en compte le poids du contenu variable du tube digestif et du pis autour de cette valeur moyenne, tandis qu'il est prévu en outre une installation (5) d'alimentation automatique pour fournir automatiquement de la nourriture à l'animal, de telle sorte que lorsque la valeur de poids désirée stockée dans la mémoire utilisée à cet instant tombe dans l'intervalle de poids établi, la quantité de nourriture à fournir à l'animal sera ajustée, **caractérisé par le fait que** lorsqu'apparaît une réduction soudaine du poids de l'animal en raison de laquelle la limite supérieure de l'intervalle de poids (J) tombe au-dessous de la valeur de poids désirée (2) et que dans un certain nombre de périodes consécutives, on mesure un poids continuant à décroitre au-dessous de la limite inférieure de l'intervalle de poids (J) alors, sans augmenter immédiatement la fourniture de nourriture, un signal d'alarme est délivré par l'ordinateur (4) inquant que l'animal peut être malade, qui peut être combiné dans l'ordinateur avec d'autres signaux indiquant des phénomènes similaires, tels que des signaux délivrés par un détecteur de mammite ou avec des signaux fournis par un pédomètre.

2. Dispositif selon la revendication 1, **caractérisé en ce que** ce dispositif est inclus dans un système comprenant aussi un dispositif de traite d'animaux, dans lequel du fourrage est distribué pendant la traite.

3. Dispositif selon la revendication 1 ou 2, **caractérisé en ce que** ce dispositif est inclus dans un système comprenant aussi un robot trayeur (6) pour nettoyer automatiquement les trayons d'un animal à traire, pour relier automatiquement des godets de trayons aux trayons de cet animal, traire automatiquement l'animal et pour débrancher automatiquement les godets de trayons des trayons tandis que, réparti sur la période de temps requise pour la traite, du fourrage est fourni.
